# EUROPEAN PATENT SPECIFICATION

(11) **EP 3 774 596 B1**
(45) Date of publication and mention of the grant of the patent: **01.06.2022**
(21) Application number: 19721124.6
(22) Date of filing: 02.04.2019
(51) Int. Cl.: B65D 85/804

(54) **CAPSULE FOR PREPARING BEVERAGES, PARTICULARLY COFFEE**
KAPSEL ZUR ZUBEREITUNG VON GETRÄNKEN
CAPSULE POUR LA PREPARATION DE BOISSONS

(30) Priority: 11.04.2018 IT 201800004381
(43) Date of publication of application: 17.02.2021
(73) Proprietor: Goglio S.p.A., 20144 Milano (IT)
(72) Inventor: BOSETTI, Osvaldo, 20144 Milano MI (IT); GALBASINI, Roberto, 20144 Milano MI (IT); GULLO, Giuseppe, 20144 Milano MI (IT); MACCAGNAN, Andrea, 20144 Milano MI (IT)
(74) Representative: Perani & Partners S.p.A.
(86) International application number: PCT/IB2019/052692
(87) International publication number: WO 2019/197940

(56) References cited:
- EP-A1- 2 631 199
- WO-A1-2014/118812
- WO-A1-2014/128315
- WO-A1-2016/186496
- WO-A2-2014/012783
- GB-A- 2 538 399

## Description

### Technical Field

The present invention relates to a capsule for preparing beverages, according to the preamble of claim 1.

In particular, said capsule is designed to contain, under sealed conditions, beverage precursor ingredients that are prepared by introducing a pressurized liquid into the capsule when it is opened during the preparation and dispensing of the beverage. This opening takes place in particular by using a specific device, within which the capsule is arranged and fastened between two opposed piston elements, the one feeding the pressurized liquid, the other collecting the prepared beverage.

The beverage precursor ingredients can be of various types, e.g. ground coffee.

The beverage is obtained by means of an extraction or solubilisation of the ingredients by introducing water at a preset temperature into the capsule.

### Prior art

Capsules for the aforementioned use are known in the specific field. They generally have a truncated-cone shape housing a cavity designed to contain such an amount of ingredient to prepare a single dose of beverage, without however excluding the possibility of containing larger amounts for the preparation of multiple doses of beverage., like for example described in EP2631199 A1.

More in detail, the capsule according to the prior art, shown for example in WO2013/060918 A1, comprises a substantially truncated cone-shaped side wall, a bottom wall, arranged at the end with the smaller diameter of the truncated cone-shaped side wall, a cavity delimited by the walls and an opening formed by the edge of the end with the larger diameter of said truncated cone-shaped side wall. Said opening is in communication with the cavity.

An annular flange, radially extending towards the outside of the cavity, is arranged around the edge of the end with the larger diameter of said truncated cone-shaped wall. A covering element is fastened to the annular flange to hermetically close the opening. The covering element can be opened when the beverage is dispensed.

The bottom wall is provided with a plurality of passages, normally sealed but openable for introducing the pressurized liquid into the cavity to prepare the beverage.

According to the known technology, the preparation of the beverage, particularly coffee-based, is obtained by placing the capsule in a device comprising a tubular piston, whose end is intended to be arranged against one side of said annular flange of the capsule, thus sealing said side of the flange as well as an abutment element designed to be at least partially arranged against the opposite side of the same annular flange of the capsule.

The abutment element is provided in a known way with ducts for collecting the beverage formed in the cavity of the capsule following the introduction of the pressurized liquid through the plurality of passages of the bottom wall of the capsule, which have opened due to the pressure exerted by the liquid.

An example of the known technology in which the seal between the piston elements of the beverage preparation device and the capsule occurs by elastic deformation of the material forming the annular flange around the capsule, is described in WO2015/128827 A1.

According to the prior art, the material with which the capsule is made, using for example injection moulding technologies, consists mainly of a plastic-type synthetic resin, whose plasticity and deformability degree helps to have good sealing conditions between the capsule and the piston elements which, as already stated, on the one hand pressurize the liquid for the preparation of the beverage and, on the other hand collect the prepared beverage.

### Prior art problem

With the introduction of biodegradable materials, particularly of the so-called "compostable" materials, the known capsule structures have shown sealing problems between the piston elements of the beverage preparing device and the capsule areas with which said elements are meant to engage in a watertight manner, particularly at the annular flange arranged around the capsule, since such compostable materials have a lower degree of deformability than conventional plastic materials that are not biodegradable.

### Object of the invention

In this context, the technical aim of the present invention is to propose a capsule for preparing beverages that overcomes the aforementioned drawbacks of the known art. In particular, it is an object of the present invention to provide a capsule for preparing beverages that is compostable and, at the same time, ensures an adequate sealing against the piston.

The specified technical aim and the specified objects are substantially achieved by means of a capsule for preparing beverages comprising the technical features set forth in one or more of the appended claims.

### Advantages of the invention

In particular, a capsule for preparing infused beverages is made entirely of compostable material. Said capsule comprises a main body having a central axis, a first and a second end.

The main body comprises an axially symmetrical side wall with respect to the central axis, converging from the first to the second end.

The main body comprises a bottom wall connected to the side wall and arranged at the second end.

Moreover, the main body has a cavity, which is designed to contain an ingredient for the preparation of beverages. Said cavity is defined by the side wall and by the bottom wall. The bottom wall can even be opened to introduce therethrough pressurized liquid inside the cavity. The cavity further has an opening arranged at the first end.

The main body further comprises an annular flange, which is connected to the side wall at the first end. The flange extends radially from the side wall towards the outside. In particular, the flange has an inner surface facing the second end and an outer surface opposite the inner surface.

The capsule further comprises a frangible covering element, which is fastened to the outer surface of the flange. Said covering element is superimposed on the opening to hermetically seal the cavity.

The flange further has a flexible inner area, which is connected directly to the side wall of the main body. Said inner area is configured to flex under the action of a hollow piston of a beverage-preparing machine.

An abutment surface is provided at the inner area and is configured to be pushed by the hollow piston.

The side wall has a main portion and a connecting portion.

The connecting portion joins the main portion to the flange, and has an increasing thickness from the main portion towards the flange.

The connecting portion is deformable due to the pressure of the piston on the abutment surface to at least partially contact the piston and create a seal against the piston.

The present invention allows obtaining that the deformation/flexing compensates both the dimensional variability of the capsules, physiologically due to their moulding process, and the constructive differences of the piston used in the different dispensing machines.

### BRIEF DESCRIPTION OF THE FIGURES

Further features and advantages of the present invention will appear more clearly from the indicative, and therefore non-limiting, description of a preferred but not exclusive embodiment of a capsule for preparing beverages, as shown in the accompanying drawings in which:
- Figure 1 is a sectional side view of a capsule for preparing beverages according to the present invention;
- Figure 1a is a sectional side view of a detail of the capsule of Figure 1;
- Figure 2 is a sectional side view of the capsule of Figure 1 in use; and
- Figure 2a is a side view of the capsule of Figure 1 in the configuration of Figure 2.

### DETAILED DESCRIPTION

Even if not explicitly stated, the single features described with reference to the specific embodiments are meant as being accessory and/or interchangeable with other features described with reference to other embodiments.

With reference to the attached figures, the reference number 1 indicates a capsule for preparing infused beverages according to the present invention. The capsule 1 is designed to be inserted in a beverage-preparing machine.

Said machine comprises a hollow piston 100, which closes the capsule 1 against a contrasting element 101. The coupling between the piston 100 and the contrasting element 101 determines a chamber 102 closed around the capsule 1. This way of preparing beverages is already known to the person skilled in the art, and will therefore not be further described. The capsule 1 according to the invention can advantageously be entirely made of a compostable material.

"Compostable material" means a material that complies with the EN 13432 standard. This material must meet all the following criteria: a) being biodegradable in no more than 6 months at least to 90%; b) being disintegrable, i.e. showing a fragmentation and loss of visibility in the final compost. The mass of the residues of the test material with a size > 2 mm must be less than 10% of the initial mass; c) having low levels of heavy metals and no negative effects on the quality of the compost; d) being stable in its pH, salt content, volatile solids, N, P, Mg and K values.

The term "compostable material" means both a single material and a plurality of different materials, provided that they are all treatable through composting.

In particular, "compostable material" means those products selected from the group comprising corn starch, potato starch or synthetic biopolymers and/or any combination of such materials that meet the EN 13432 standard.

The capsule 1 comprises a main body 10. The main body 10 has an axisymmetric geometry, in particular substantially conical, and has a central axis "A". With respect to the central axis "A", the main body 10 has a first end 10a and a second end 10b. The main body 10 narrows along the central axis "A" from the first end 10a to the second end 10b.

More in detail, the main body 10 comprises a side wall 2. In particular, said side wall 2 is axially symmetrical with respect to the central axis "A" and converges from the first end 10a to the second end 10b.

The main body 10 is closed at the second end 10b by a bottom wall 3. Said bottom wall 3 is connected to the aforementioned side wall 2.

The main body 10 also has a cavity 4, which has the function of containing an ingredient for the preparation of beverages, for example coffee. The cavity 4 is defined by the side wall 2 and by the bottom wall 3. The cavity 4 has an opening 12 arranged at the first end 10a.

The bottom wall 3 is designed to be openable to allow the introduction of a pressurized liquid into the cavity 4.

More in detail, the bottom wall 3 is provided with a plurality of perforations 9, preferably arranged within an annular channel 20. All said perforations 9 are closed by a covering element 11, made of laminar material, arranged inside the cavity 4. By way of example, the covering element 11 can be a metallic or polymeric foil, a film or any other means known to the person skilled in the art for similar uses, which has the property of tearing, degrading when in contact with water or which can be lifted, as described in the Italian patent application n. 102018000002185 in the name of the same Applicant.

The main body 1 further comprises an annular flange 14, which is connected to the side wall 2, in particular at the first end 10a. The flange 14 extends radially from the side wall 2 towards the outside. The flange 14 is arranged substantially at the opening 12 of the cavity 4. Preferably, the flange 14 has a thickness of between 0.85 mm and 1.05 mm.

The flange 14 has in particular an inner surface 14a facing the second end 10b. An outer surface 14b, opposite the inner surface 14a, is substantially facing outward, namely opposite the direction of development of the side wall 2. In use, the inner surface 14a of the flange 14 at least partially contacts the piston 100 of the beverage-preparing machine. The outer surface 14a, on the other hand, abuts against the contrasting element 101.

To hermetically seal the cavity 4, the capsule 1 comprises a frangible covering element 11a, which is fastened to the outer surface 14b of the flange 14 to overlap the opening 12. As an example, the covering element 11a may be a metal or polymeric sheet, a film or any other means known to the person skilled in the art for similar uses.

In use, the covering element 11 directly contacts the contrasting element 101.

According to the invention, the flange 14 has an inner flexible area 16, which is directly connected to the side wall 2. In other words, the inner area 16 corresponds to the root of the flange 14. Said inner area 16 is in particular configured to flex under the action of the aforementioned piston 100.

An abutment surface 18 is arranged at the inner area 16 to be pushed by the piston 100. More details will be given in a later part of the present description.

The flange 14 also has an outer area 17 that is connected to the inner area 16 and is arranged outside it. In other words, the outer area 17 of the flange 14 cantileverly extends from the inner area 16.

More in detail, the side wall 2 has a main portion 2a and a connecting portion 2b. According to the preferred embodiment, the main portion 2a has a substantially constant thickness and is inclined by a first angle B with respect to the central axis "A".

The connecting portion 2b joins the main portion 2a to the flange 14.

Moreover, the connecting portion 2b has an increasing thickness from the main portion 2a to the flange 14.

An outer surface 2c of the side wall 2 has, at the connecting portion 2b, an inclination of a second angle C with respect to the central axis "A". Said second angle C is typically greater than the first angle B.

According to the preferred embodiment of the invention, the first angle B can be comprised between 4° and 25° and is preferably equal to 8°.

The second angle C can be comprised between 15° and 45° and is preferably equal to 25°.

According to an alternative embodiment of the present invention, this difference in angles can also be achieved by maintaining the connecting portion 2b of the side wall 2 with a constant thickness, analogously to the main portion 2a, simply by varying its inclination.

According to the invention, the connecting portion 2b is deformable due to a pressure of the piston 100 on the abutment surface 18 to at least partially contact the piston 100 and create a seal against it, thus isolating the chamber 102 with the capsule 1 therein. Moreover, a seal is advantageously created between the piston 100 and the abutment surface 18.

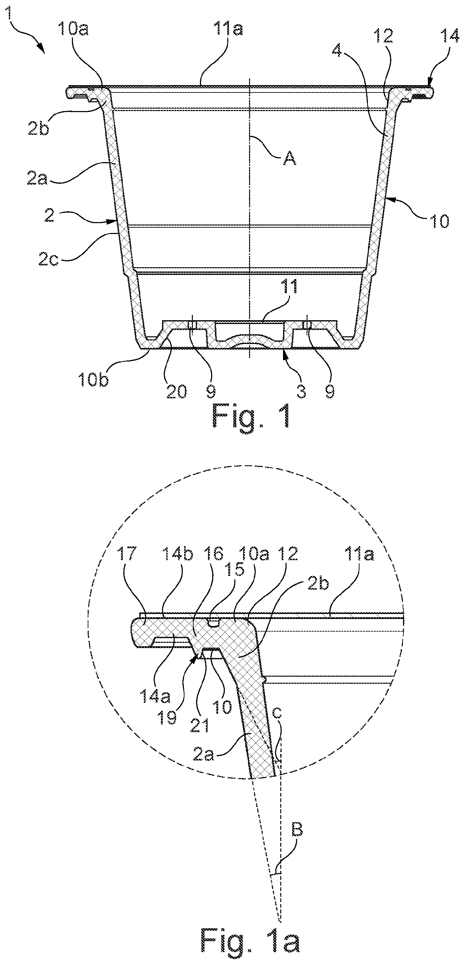

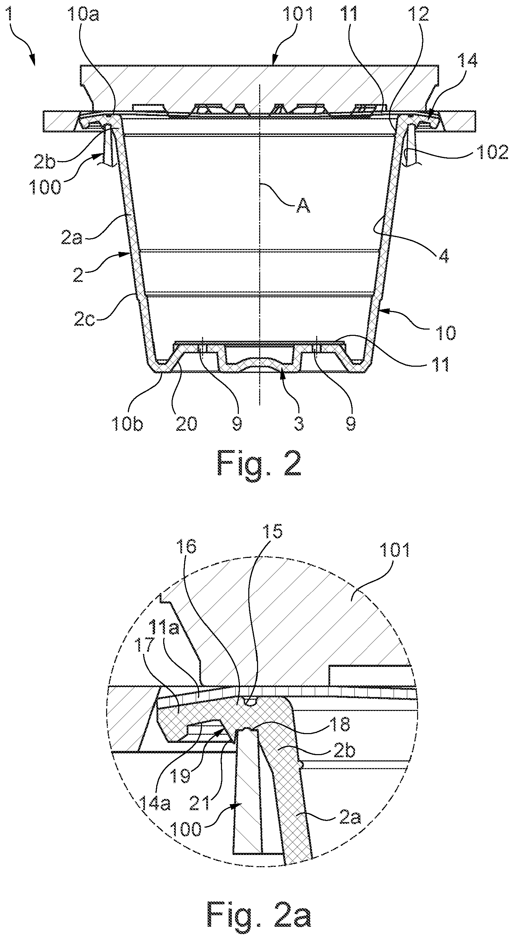

More in detail, the flange 14 is switchable under the action of the piston 100 from an undeformed configuration, shown for example in Figure 1, to a flexed configuration visible for example in Figure 2.

In the undeformed configuration, the outer area 17 of the flange 14 is substantially coplanar to the opening 12.

In the flexed configuration, the flange 14 is bent at the inner area 16, thus bringing the outer area 17 closer to the side wall 2 of the main body 10.

In the described embodiment of the invention, the inner area 16 of the flange 14 has an annular groove 15. In particular, said groove 15 is formed on the outer surface 14b near the opening 12 of the cavity 4. Said groove 15 weakens the root of the flange 14, thus allowing it to flex according to the predetermined mode. In alternative embodiments of the invention, the flexing of the flange 14 can be facilitated in all the ways known to the person skilled in the art.

More in detail, the groove 15 has a diameter comprised between 30 mm and 40 mm. The depth of the groove 15 is approximately comprised between 0.1 mm and 0.7 mm, and is in particular equal to 0.2 mm.

The main body further comprises centring means 19 for arranging the capsule 1 inside the beverage-preparing machine. These centring means 19 are arranged near the abutment surface 18 and externally thereto. More in detail, the centring means 19 comprise an annular projection 21, which completely surrounds the abutment surface 18.

Quite advantageously, the centring means 19 are configured so as not to contact the piston 100 when the flange 14 is in a flexed configuration, namely during the beverage dispensing and the preceding steps. This avoids any excessive stress on the piston 100, thus extending the useful life of the machine that contains it. Normally, in fact, the piston 100 is designed to be used with aluminium caps or in any case with more deformable materials than the compostable ones, and an excessive stress could damage it.

## Claims

1. A capsule (1) for preparing infused beverages, comprising a main body (10) with a central axis (A), a first end (10a) and a second end (10b), said main body (10) comprising:
- a side wall (2), which is axially symmetrical with respect to said central axis (A) and converges from the first (10a) to the second (10b) end,
- a bottom wall (3), which is connected to the side wall (2) and is arranged at said second end (10b),
- a cavity (4) for containing an ingredient for preparing beverages, said cavity (4) being defined by said side wall (2) and by said bottom wall (3), said bottom wall (3) being openable for introducing pressurized liquid into said cavity (4), said cavity (4) having an opening (12) at the first end (10a),
- an annular flange (14) connected to said side wall (2) at said first end (10a) and radially extending outwards from said side wall (2), said flange (14) having an inner surface (14a) that faces said second end (10b) and an outer surface (14b) opposite the inner surface (14a);
said capsule (1) further comprising a frangible covering element (11a) fastened to the outer surface (14b) of said flange (14) and overlapping said opening (12) to hermetically seal said cavity (4),
**characterized in that** the capsule (1) is entirely made of a compostable material and **in that** said flange (14) has:
- a flexible inner area (16), which is directly connected to the side wall (2) and is configured to flex under the action of a hollow piston (100) of a beverage preparing machine;
- an abutment surface (18) arranged at said inner area (16) and configured to be pushed by said piston (100);
wherein said side wall (2) comprises a main portion (2a) and a connecting portion (2b), said connecting portion (2b) joining said main portion (2a) to said flange (14) and increasing in thickness from said main portion (2a) to said flange (14), said connecting portion (2b) being deformable due to a pressure of said piston (100) on said abutment surface (18) to at least partially contact said piston (100) and create a seal against said piston (100).

2. A capsule (1) according to claim 1, wherein said flange (14) has an outer area (17) connected to said inner area (16) and external to this latter, said flange (14) being switchable under the action of said piston (100) from an undeformed configuration, in which the outer area (17) is substantially coplanar with said opening (12), to a flexed configuration, in which the flange is bent at said inner area (16) to bring the outer area (17) closer to the side wall (2) of said main body (10).

3. A capsule (1) according to claim 2, **characterized in that** it comprises centring means (19) for arranging said capsule (1) in a beverage preparing machine, said centring means (19) being close to said abutment surface (18) and external thereto.

4. A capsule (1) according to claim 3, wherein said centring means (19) comprise an annular projection (21) surrounding said abutment surface (18).

5. A capsule (1) according to claim 3 or 4, **characterized in that** said centring means (19) are configured not to contact said piston (100) when said flange (14) is in the flexed configuration.

6. A capsule (1) according to any one of the preceding claims, wherein said inner area (16) of said flange (14) has an annular groove (15) formed on the outer surface (2c) close to said opening (12).

7. A capsule (1) according to claim 6, wherein said groove (15) has a diameter that ranges from 30 mm to 40 mm.

8. A capsule (1) according to claim 7, wherein said groove (15) has a depth that ranges from 0.1 mm to 0.7 mm.

9. A capsule (1) according to any of the preceding claims, wherein said flange (14) has a thickness that ranges from 0.85 mm to 1.05 mm.

10. A capsule (1) according to any one of the preceding claims, wherein said main portion (2a) is inclined by a first angle (B) relative to the central axis (A), which ranges from 4° to 25°.

11. A capsule (1) according to any one of the preceding claims, wherein an outer surface (2c) of the side wall (2) is inclined, at said connecting portion (2b), by a second angle (C) relative to the central axis (A), said second angle (C) being greater than the first angle (B).

12. A capsule (1) according to claim 11, wherein said second angle (C) ranges from 15° to 45°.

## Patentansprüche

1. Kapsel (1) zur Herstellung von Aufgussgetränken, umfassend einen Hauptkörper (10) mit einer Mittelachse (A), einem ersten Ende (10a) und einem zweiten Ende (10b), wobei der Hauptkörper (10) umfasst:
- eine Seitenwand (2), die in Bezug auf die Mittelachse (A) axial symmetrisch ist und vom ersten (10a) zum zweiten (10b) Ende hin konvergiert,
- eine Bodenwand (3), die mit der Seitenwand (2) verbunden ist und an dem zweiten Ende (10b) angeordnet ist,
- einen Hohlraum (4) zur Aufnahme einer Zutat für die Zubereitung von Getränken, wobei der Hohlraum (4) durch die Seitenwand (2) und durch die Bodenwand (3) gebildet wird, wobei die Bodenwand (3) geöffnet werden kann, um unter Druck stehende Flüssigkeit in den Hohlraum (4) einzuführen, wobei der Hohlraum (4) eine Öffnung (12) am ersten Ende (10a) aufweist,
- einen ringförmigen Flansch (14), der mit der Seitenwand (2) an dem ersten Ende (10a) verbunden ist und sich von der Seitenwand (2) radial nach außen erstreckt, wobei der Flansch (14) eine Innenfläche (14a), die dem zweiten Ende (10b) zugewandt ist, und eine Außenfläche (14b) gegenüber der Innenfläche (14a) aufweist;
wobei die Kapsel (1) ferner ein zerbrechliches Abdeckelement (11a) umfasst, das an der Außenfläche (14b) des Flansches (14) befestigt ist und die Öffnung (12) überlappt, um den Hohlraum (4) hermetisch abzuschließen,
**dadurch gekennzeichnet, dass** die Kapsel (1) vollständig aus einem kompostierbaren Material besteht und dass der Flansch (14) aufweist:
- einen flexiblen Innenbereich (16), der direkt mit der Seitenwand (2) verbunden ist und so gestaltet ist, dass er sich unter der Handlung eines Hohlkolbens (100) einer Getränkezubereitungsmaschine biegt;
- eine Anschlagfläche (18), die an dem Innenbereich (16) angeordnet ist und so konfiguriert ist, dass sie von dem Kolben (100) gedrückt wird;
wobei die Seitenwand (2) einen Hauptabschnitt (2a) und einen Verbindungsabschnitt (2b) umfasst, wobei der Verbindungsabschnitt (2b) den Hauptabschnitt (2a) mit dem Flansch (14) verbindet und von dem Hauptabschnitt (2a) zu dem Flansch (14) an Dicke zunimmt, wobei der Verbindungsabschnitt (2b) aufgrund eines Drucks des Kolbens (100) auf die Anschlagfläche (18) verformbar ist, um zumindest teilweise den Kolben (100) zu berühren und eine Dichtung gegen den Kolben (100) zu erzeugen.

2. Kapsel (1) nach Anspruch 1, wobei der Flansch (14) einen Außenbereich (17) aufweist, der mit dem Innenbereich (16) verbunden ist und sich außerhalb des letzteren befindet, wobei der Flansch (14) unter der Handlung des Kolbens (100) von einer unverformten Konfiguration, in der der Außenbereich (17) im Wesentlichen koplanar mit der Öffnung (12) ist, in eine gebogene Konfiguration umgeschaltet werden kann, in der der Flansch an dem Innenbereich (16) gebogen ist, um den Außenbereich (17) näher an die Seitenwand (2) des Hauptkörpers (10) zu bringen.

3. Kapsel (1) nach Anspruch 2, **dadurch gekennzeichnet, dass** sie Zentriermittel (19) zum Anordnen der Kapsel (1) in einer Getränkezubereitungsmaschine umfasst, wobei sich die Zentriermittel (19) nahe der Anschlagfläche (18) und außerhalb derselben befinden.

4. Kapsel (1) nach Anspruch 3, wobei die Zentriermittel (19) einen ringförmigen Vorsprung (21) umfassen, der die Anschlagfläche (18) umgibt.

5. Kapsel (1) nach Anspruch 3 oder 4, **dadurch gekennzeichnet, dass** die Zentriermittel (19) so gestaltet sind, dass sie den Kolben (100) nicht berühren, wenn sich der Flansch (14) in der gebogenen Konfiguration befindet.

6. Kapsel (1) nach einem der vorhergehenden Ansprüche, wobei der Innenbereich (16) des Flansches (14) eine ringförmige Nut (15) aufweist, die auf der Außenfläche (2c) nahe der Öffnung (12) ausgebildet ist.

7. Kapsel (1) nach Anspruch 6, wobei die Rille (15) einen Durchmesser von 30 mm bis 40 mm aufweist.

8. Kapsel (1) nach Anspruch 7, wobei die Rille (15) eine Tiefe im Bereich von 0,1 mm bis 0,7 mm aufweist.

9. Kapsel (1) nach einem der vorhergehenden Ansprüche, wobei der Flansch (14) eine Dicke im Bereich von 0,85 mm bis 1,05 mm aufweist.

10. Kapsel (1) nach einem der vorangehenden Ansprüche, wobei der Hauptteil (2a) um einen ersten Winkel (B) relativ zur Mittelachse (A) geneigt ist, der im Bereich von 4° bis 25° liegt.

11. Kapsel (1) nach einem der vorhergehenden Ansprüche, wobei eine Außenfläche (2c) der Seitenwand (2) an dem Verbindungsabschnitt (2b) um einen zweiten Winkel (C) relativ zur Mittelachse (A) geneigt ist, wobei der zweite Winkel (C) größer als der erste Winkel (B) ist.

12. Kapsel (1) nach Anspruch 11, wobei der zweite Winkel (C) zwischen 15° und 45° liegt.

## Revendications

1. Capsule (1) pour préparer des boissons infusées, comprenant un corps principal (10) avec un axe central (A), une première extrémité (10a) et une seconde extrémité (10b), ledit corps principal (10) comprenant :
- une paroi latérale (2), qui est axialement symétrique par rapport audit axe central (A) et converge de la première (10a) à la seconde (10b) extrémité,
- une paroi de fond (3), qui est reliée à la paroi latérale (2) et est agencée au niveau de ladite seconde extrémité (10b),
- une cavité (4) pour contenir un ingrédient pour préparer des boissons, ladite cavité (4) étant définie par ladite paroi latérale (2) et par ladite paroi de fond (3), ladite paroi de fond (3) pouvant être ouverte pour introduire du liquide sous pression dans ladite cavité (4), ladite cavité (4) ayant une ouverture (12) à la première extrémité (10a),
- un rebord annulaire (14) relié à ladite paroi latérale (2) au niveau de ladite première extrémité (10a) et s'étendant radialement vers l'extérieur à partir de ladite paroi latérale (2), ledit rebord (14) ayant une surface intérieure (14a) qui fait face à ladite seconde extrémité (10b) et une surface extérieure (14b) opposée à la surface intérieure (14a) ;
ladite capsule (1) comprenant en outre un élément de couverture frangible (11a) fixé à la surface extérieure (14b) dudit rebord (14) et chevauchant ladite ouverture (12) pour sceller hermétiquement ladite cavité (4),
**caractérisé en ce que** la capsule (1) est entièrement faite d'un matériau compostable et **en ce que** ledit rebord (14) a :
- une zone intérieure flexible (16), qui est directement reliée à la paroi latérale (2) et est configurée pour fléchir sous l'action d'un piston creux (100) d'une machine de préparation de boissons ;
- une surface de butée (18) disposée au niveau de ladite zone intérieure (16) et configurée pour être poussée par ledit piston (100) ;
dans laquelle ladite paroi latérale (2) comprend une partie principale (2a) et une partie de connexion (2b), ladite partie de connexion (2b) reliant ladite partie principale (2a) audit rebord (14) et augmentant en épaisseur de ladite partie principale (2a) audit rebord (14), ladite partie de connexion (2b) étant déformable en raison d'une pression dudit piston (100) sur ladite surface de butée (18) pour venir au moins partiellement en contact avec ledit piston (100) et créer un joint contre ledit piston (100).

2. Capsule (1) selon la revendication 1, dans laquelle ledit rebord (14) a une zone extérieure (17) reliée à ladite zone intérieure (16) et extérieure à cette dernière, ledit rebord (14) pouvant être commuté sous l'action dudit piston (100) d'une configuration non déformée, dans laquelle la zone extérieure (17) est sensiblement coplanaire avec ladite ouverture (12), à une configuration fléchie, dans laquelle le rebord est courbé au niveau de ladite zone intérieure (16) pour rapprocher la zone extérieure (17) de la paroi latérale (2) dudit corps principal (10).

3. Capsule (1) selon la revendication 2, **caractérisée en ce qu'**elle comprend des moyens de centrage (19) pour agencer ladite capsule (1) dans une machine de préparation de boissons, lesdits moyens de centrage (19) se trouvant près de ladite surface de butée (18) et à l'extérieur de celle-ci.

4. Capsule (1) selon la revendication 3, dans laquelle lesdits moyens de centrage (19) comprennent une saillie annulaire (21) entourant ladite surface de butée (18).

5. Capsule (1) selon la revendication 3 ou 4, **caractérisée en ce que** lesdits moyens de centrage (19) sont configurés pour ne pas entrer en contact avec ledit piston (100) lorsque ledit rebord (14) est dans la configuration fléchie.

6. Capsule (1) selon l'une quelconque des revendications précédentes, dans laquelle ladite zone intérieure (16) dudit rebord (14) a une rainure annulaire (15) formée sur la surface extérieure (2c) près de ladite ouverture (12).

7. Capsule (1) selon la revendication 6, dans laquelle ladite rainure (15) a un diamètre allant de 30 mm à 40 mm.

8. Capsule (1) selon la revendication 7, dans laquelle ladite rainure (15) a une profondeur allant de 0,1 mm à 0,7 mm.

9. Capsule (1) selon l'une quelconque des revendications précédentes, dans laquelle ledit rebord (14) a une épaisseur allant de 0,85 mm à 1,05 mm.

10. Capsule (1) selon l'une quelconque des revendications précédentes, dans laquelle ladite portion principale (2a) est inclinée d'un premier angle (B) par rapport à l'axe central (A), allant de 4° à 25°.

11. Capsule (1) selon l'une quelconque des revendications précédentes, dans laquelle une surface extérieure (2c) de la paroi latérale (2) est inclinée, au niveau de ladite partie de connexion (2b), d'un second angle (C) par rapport à l'axe central (A), ledit second angle (C) étant supérieur au premier angle (B).

12. Capsule (1) selon la revendication 11, dans laquelle ledit second angle (C) est compris entre 15° et 45°.
